# EUROPÄISCHE PATENTSCHRIFT

(11) **EP 0 950 344 B1**
(45) Veröffentlichungstag und Bekanntmachung des Hinweises auf die Patenterteilung: **17.11.2004**
(21) Anmeldenummer: 99107624.1
(22) Anmeldetag: 16.04.1999
(51) Int. Cl.: A01B 49/06

(54) **Landwirtschaftliche Bestellkombination**
Agricultural seeder combination
Machine agricole combinée de semis

(30) Priorität: 16.04.1998 DE 19816813
(43) Veröffentlichungstag der Anmeldung: 20.10.1999
(73) Patentinhaber: Lemken GmbH & Co. KG, 46519 Alpen (DE)
(72) Erfinder: Terboven, Johannes Dipl.-Ing., 46519 Alpen (DE); Werries, Dieter, 49134 Wallenhorst (DE)
(74) Vertreter: Schulte, Jörg, Dipl.-Ing.

(56) Entgegenhaltungen:
- EP-A- 0 311 221
- EP-A- 0 427 155
- EP-A- 0 559 522
- EP-A- 0 629 337
- DE-U- 9 411 571

## Beschreibung

Die Erfindung betrifft eine landwirtschaftliche Bestellkombination bestehend aus einer Kreiselegge mit mindestens einer Getriebewanne, mit einer Reihe nebeneinander angeordneten Werkzeugkreiseln, mit einem an der Getriebewanne befestigten Anbaubock für den Anbau an einen Traktor oder ein Zugfahrzeug, mit einer Nachlaufwalze und mit einer Drillmaschine mit Saatgutbehälter, die mit der Kreiselegge verbunden und im Abstand dazu angeordnet ist.

Eine landwirtschaftliche Bestellkombination ist zum Beispiel der EP 359 896 zu entnehmen. Bei dieser Bestellkombination ist eine Drillmaschine über Kupplungsstangen mit dem Anbaubock des Bodenbearbeitungsgerätes verbunden. Während der Arbeit stützt sich die Drillmaschine auf die Walze ab und entlastet somit das Bodenbearbeitungsgerät. Das Bodenbearbeitungsgerät kann dadurch bei Auftreffen auf Hindernisse im Boden ausweichen, ohne die Drillmaschine anheben zu müssen. Zur Reduzierung des Hubkraftbedarfes und um eine zu große Entlastung der Vorderachse des Zugfahrzeuges zu verhindern, kann die Drillmaschine nach vorne geschwenkt werden. Auch bei der aus der EP - 559 522 bekannten Bestellkombination ruht die Drillmaschine auf der Walze, wobei zwischen beiden elastische Dämpfer angeordnet sind. Dem Anbaubock ist gegebenenfalls eine Kreiselegge zugeordnet. Sie wird mit dem Anbaubock verbunden.

Diese Lösung hat den Nachteil, dass bei Verwendung unterschiedlicher Walzen Anpassungen an den Trägern der Walze, am Walzenrahmen oder an der Drillmaschine vorgenommen werden müssen. Anpassungen müssen auch dann vorgenommen werden, wenn zwischen der Walze und der Egge zusätzliche Arbeitswerkzeuge wie Planierbalken oder Zinken angebaut werden sollen. Zusätzlich tritt auch hier der Nachteil auf, dass die Walze sehr hoch belastet wird, wenn sie über ein Hindernis rollt, da sie dann die Kreiselegge und die Drillmaschine zusammen mit dem Saatgutbehälter tragen und anheben muss. Auch die EP-A-427 155 zeigt eine Bestellkombination mit einer solchen Kreiselegge. Auch hier stützt sich die nachgeordnete Drillmaschine eindeutig auf der Walze ab bzw. ist sogar mit dieser fest verbunden.

Der Erfindung stellt sich somit die Aufgabe, eine landwirtschaftliche Bestellkombination zu schaffen, die einfach aufgebaut ist, die sowohl die Kreiselegge als auch die Walze aber auch die Drillmaschine vor Überlastungen schützt und die eine einfach Verbindung über Anbauteile von Drillmaschine und Kreiselegge gewährleistet, unabhängig von dem Zubehör und den Walzenausführungen.

Die Aufgabe wird erfindungsgemäß wie beansprucht gelöst.

Dadurch wird sichergestellt, dass die Kreiselegge trotz der auflastenden Drillmaschine bei Auftreffen auf ein Bodenhindernisses nach oben ausweichen kann und dabei die Drillmaschine praktisch nicht anheben muss. Aufgrund der elastischen Lagerung und des vorhandenen Abstandes zwischen Drillmaschine und Kreiselegge können diese Belastungen kompensiert werden, wobei sich der Abstand zwischen Drillmaschine und Kreiselegge entsprechend verringert. Eine Überlastung der Kreiselegge oder deren Werkzeuge ist somit ausgeschlossen, obwohl die Gewichtskraft der Drillmaschine auf der Kreiselegge ruht. Gleichzeitig werden die anderen Bodenbearbeitungsgeräte, insbesondere die Walze auch bei Auftreffen auf ein Hindernis kaum belastet, da sie ebenfalls nach oben ausweichen können. Zugänglichkeit und Austauschbarkeit der Walze bleiben ebenso erhalten wie die Möglichkeit, zusätzliche Arbeitswerkzeuge wie Planierbalken oder Zinken anzubauen.

Eine bevorzugte Ausführungsform der Erfindung sieht vor, dass zwischen Drillmaschine und/oder Saatgutbehälter und Anbaubock und/oder Getriebewanne Anbauteile angeordnet sind, die elastisch nachgebbar ausgebildet sind. Durch die Anordnung dieser elastisch nachgebbaren Bauteile zwischen Drillmaschine bzw. Saatgutbehälter und Anbaubock wird eine Verbindung erreicht, die gleichzeitig den gewünschten Abstand zwischen Drillmaschine bzw. Saatgutbehälter und Kreiselegge festlegt. Darüber hinaus stellen die Anbauteile aufgrund ihrer Nachgiebigkeit zudem die elastische Wirkung zwischen Drillmaschine bzw. Saatgutbehälter und Kreiselegge sicher. Die Anbauteile geben bei einer Stoßbelastung nach und die sonst üblichen großen Massenbeschleunigungskräfte treten nicht auf. Es ist auch möglich, die Funktionen Verbindung, Nachgiebigkeit und Abstandswahrung durch Einzelbauteile zu gewährleisten.

Erfindungsgemäß ist weiter vorgesehen, dass die Anbauteile gelenkig am Anbaubock angeordnet sind und um Achsen über mindestens einen Energiespeicher, der jeweils im Abstand zu der jeweiligen Achse an das jeweilige Anbauteil angreift, gegen Anschläge gehalten sind, die vorzugsweise einstellbar ausgebildet sind. Durch diese einfache Bauweise wird vorteilhaft sichergestellt, dass die Anbauposition bzw. die Arbeitsposition vorgebbar ist und der Abstand oder Freiraum zwischen der Kreiselegge und der Drillmaschine den Gegebenheiten angepasst werden kann.

Erfindungsgemäß ist weiter vorgesehen, dass die Energiespeicher vorgespannt sind und insgesamt eine größere Vorspannkraft besitzen als die Gewichtskraft der Drillmaschine. Dadurch werden die Anbauteile und damit die Drillmaschine sicher in ihrer Arbeitsstellung gehalten und ein Nachgeben der Anbauteile wird so sicher verhindert. Die Energiespeicher geben nur dann nach, wenn die Kreiselegge auf ein Hindernis stößt und nach oben ausweicht.

Weiter ist erfindungsgemäß vorgesehen, dass der jeweilige Energiespeicher als Gasdruckfeder, Federspeicher, Druckspeicher, Federdämpfungseinheit, Hydraulikzylinder mit Hydrospeicher oder als Federeinheit ausgebildet ist. Dadurch kann je nach Erfordernis ein einfacher Energiespeicher, z.B. eine Federeinheit oder ein fernbedienbarer Energiespeicher z.B. ein Hydraulikzylinder mit Hydrospeicher eingesetzt werden. Bei der zuletzt genannten Ausführungsform kann bei Bedarf der Saatgutbehälter abgesenkt oder vor der Kehrfahrt auf dem Vorgewende und für die Transportfahrt in eine schwerpunktsgünstige Stellung nach vorne geschwenkt werden. Für diese Ausführungsform kommen dann entsprechend längere Anbauteile zum Einsatz.

Um ein Nachschwingen oder Aufschaukeln der Drillmaschine während der Arbeit zu verhindern, ist erfindungsgemäß vorgesehen, dass zur Schwingungsdämpfung Stoßdämpfer vorgesehen sind, die vorzugsweise mit mindestens einem Anbauteil und dem Anbaubock verbunden sind.

Zweckmäßigerweise ist vorgesehen, dass die Anbauteile als der Kreiselegge oder der Drillmaschine und/oder dem Saatgutbehälter zugeordnete Schwenkvorrichtung ausgebildet sind. Insbesondere bei der Ausführungsform einer Bestellkombination mit einem in großem Abstand zum Anbaubock angeordneten Saatgutbehälter ist es vorteilhaft, die Anbauteile gleichzeitig als Schwenkvorrichtung auszubilden. In diesem Falle sind die Anbauteile länger ausgebildet und ermöglichen ein Schwenken der Drillmaschine oder des Saatgutbehälters in eine schwerpunktsgünstige Stellung.

Weiter ist erfindungsgemäß vorgesehen, dass sowohl die Kreiselegge als auch eine nachgeordnete Scharschiene breiter als 3,0 m sind, z.B. 4,0 m, 4,5 m, 5,0 m oder 6,0 m und für den Transport auf eine zulässige Transportbreite einklappbar ausgebildet sind. Insbesondere breite Bestellkombinationen belasten die einzelnen Bauteile sehr hoch. Daher wirken sich die Merkmale der vorliegenden Erfindung insbesondere bei breiten und einklappbaren Bestellkombinationen sehr positiv aus. Sie bieten einen einfachen, wirksamen und kostengünstigen Schutz für die gesamte Bestellkombination, die dementsprechend leichter gebaut werden kann, da unkalkulierbare Kräfte nicht auftreten können.

Die Erfindung zeichnet sich insbesondere dadurch aus, dass eine Bestellkombination geschaffen ist, die Kreiselegge, Walze und Drillmaschine gleichermaßen vor Überlastungen schützt, indem die Gewichtskraft der Drillmaschine auf der Kreiselegge ruht, aber ein Ausweichen der Kreiselegge bei Auftreffen auf ein Bodenhindernis ohne Anheben der Drillmaschine gewährleistet ist. Dieses Ausweichen wird insbesondere durch die Anordnung und Ausbildung der Anbauteile zwischen Anbaubock und Drillmaschine bzw. Saatgutbehälter ermöglicht. Ausreichende Abstände zwischen Kreiselegge und Saatgutbehälter bzw. Drillmaschine schaffen den Raum für diese Ausweichbewegungen.

Weitere Einzelheiten und Vorteile des Erfindungsgegenstandes ergeben sich aus der nachfolgenden Beschreibung der zugehörigen Zeichnung, in der zwei bevorzugte Ausführungsbeispiele mit den dazu notwendigen Einzelheiten und Einzelteilen dargestellt ist. Es zeigen:
- Fig. 1: eine Kreiselegge mit aufgebauter Drillmaschine in Seitenansicht und
- Fig. 2: eine Kreiselegge mit hochschwenkbarer Drillmaschine in Seitenansicht.

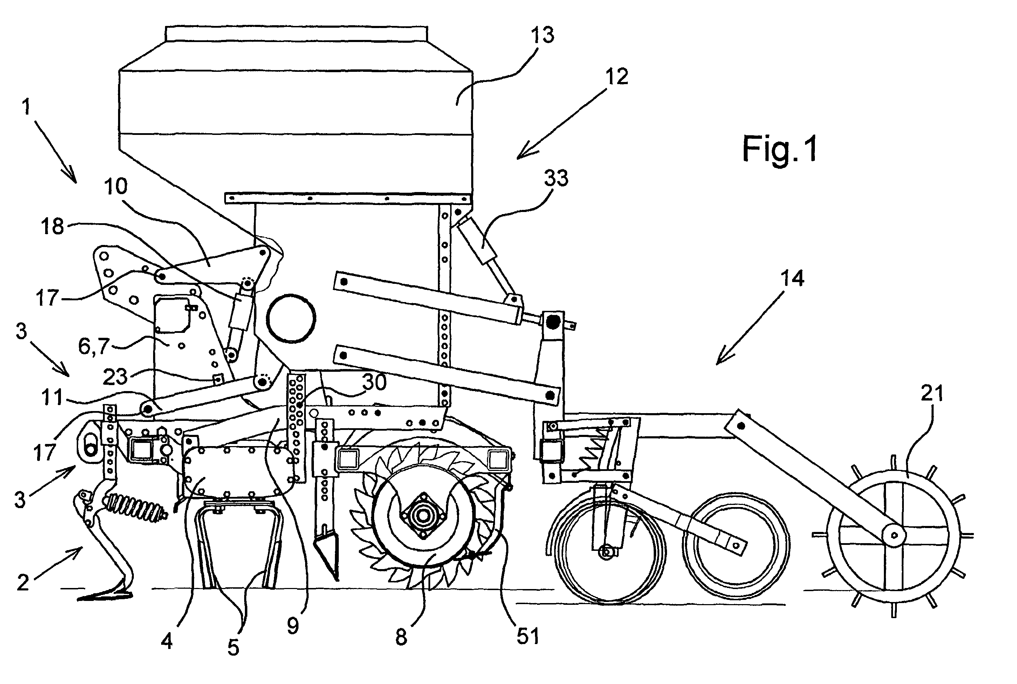

Die Figur 1 zeigt eine Bestellkombination 1 bestehend aus einem Bodenbearbeitungsgerät 2, nämlich einer Kreiselegge 3 mit einer Getriebewanne 4, mit einer Reihe nebeneinander angeordneten Werkzeugkreiseln 5, mit einem an der Getriebewanne 4 befestigten Anbaubock 7, mit einer Nachlaufwalze 8, die über Träger schwenkbar mit der Getriebewanne 4 verbunden ist und mit einer am Anbaubock 7 über Anbauteile aufgesattelten oder aufgebauten Drillmaschine 12 mit einem Saatgutbehälter 13, mit einer Scharschiene 14 und mit einer Antriebsvorrichtung 21 für den Antrieb der nicht dargestellten Säwelle oder Säräder.

Bei dieser Drillmaschine 12 kann es sich um eine pneumatische Drillmaschine aber auch um eine mechanische Drillmaschine handeln, bei der dosiertes Material zu den Säscharen transportiert wird. Daher wurden die für pneumatische Drillmaschinen spezifischen Dosier-, Verteil-, Zuführ-, Gebläse- und Leitsysteme nicht in der Figur 1 wiedergegeben. Die Figur 1 zeigt auch nicht den Antrieb des Gebläses, der z.B. elektrisch, hydraulisch oder mit Hilfe eines Verbrennungsmotors erfolgen kann und auch nicht den Antrieb der Säräder oder der Dosiereinheiten, der elektrisch, hydraulisch oder auch mechanisch erfolgen kann und dem Stand der Technik entsprechend über Sensoren, Bordcomputer und Stellteile gesteuert und überwacht wird. Die Drillmaschine 12 oder der Saatgutbehälter 13 ist wie bereits erwähnt über Anbauteile 10, 11 am Anbaubock 7 oder dem Dreipunktturm 6 der Kreiselegge angebaut. Die Anbauteile sind in diesem Fall als nachgebbare Anbauteile 10, 11 ausgebildet, d. h. sie werden über einen Energiespeicher 18 gegen Anschläge 23 gedrückt. Dabei weist der Energiespeicher 18 eine größere Kraft auf als die Gewichtskraft der kompletten Drillmaschine 12.

Wenn die Kreiselegge 3 während der Arbeit gegen ein Hindernis stößt, so kann sie einfach über das Hindernis hinweggeführt werden, ohne dass die Drillmaschine 12 merklich mit angehoben werden muss. Bei dieser kurzen aber heftigen Stoßbelastung gibt lediglich der Energiespeicher 18 kurz nach und der Abstand der Drillmaschine 12 zur Kreiselegge 3 verringert sich dabei entsprechend.

Durch diese Maßnahme wird verhindert, dass die Kreiselegge 3 oder deren Werkzeuge 5 überlastet werden. Obwohl die Gewichtskraft der Drillmaschine 12 auf der Kreiselegge 3 ruht, ist dennoch keine Überlastung zu befürchten. Die bei dem Auftreffen auf ein Hindernis auftretenden Massenbeschleunigungskräfte sind häufig fünfbis sechsmal größer als das Gerätegewicht, das im Vergleich dazu unerheblich ist.

Um ein Ausweichen der Kreiselegge 3 nach oben zu gewährleisten, ist die Drillmaschine 12 im Abstand zur Kreiselegge 3 angeordnet. Die Kreiselegge 3 selbst wird in der Tiefe über die Nachlaufwalze 8 geführt, wobei die Arbeitstiefe über die Tiefeneinstellvorrichtung 30 vorgebbar ist.

Die Tiefenführungseinrichtung ist so ausgeführt, dass sie ein Ausweichen der Kreiselegge 3 nach oben zulässt, ohne dass die Nachlaufwalze 8 mit angehoben werden muss. Um für den Transport eine ausreichende Bodenfreiheit für die Scharschiene 14 und die Antriebsvorrichtung 21, die vorzugsweise als Impulsrad ausgebildet ist, sicherzustellen, wird die komplette Scharschiene 14 zusammen mit der Antriebsvorrichtung 21 über den Hydraulikzylinder 33 ausgehoben. Dabei ist die Aushubhöhe so hoch, dass auch die Abstreiforgane 51 der Walze 8 problemlos erreicht werden können.

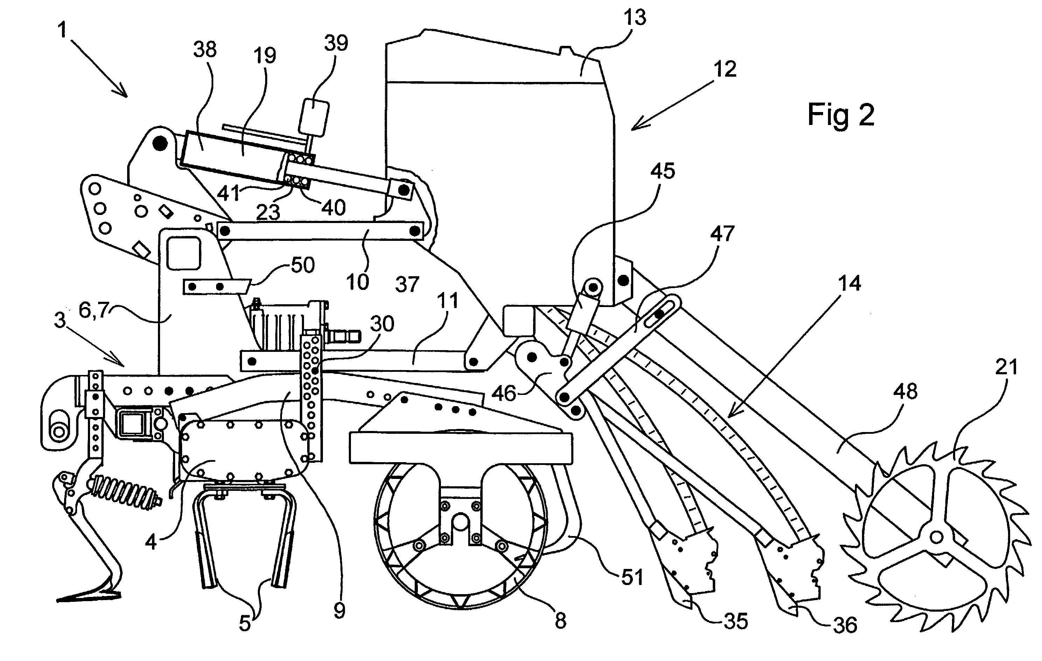

Die Figur 2 zeigt ebenfalls eine Bestellkombination 1 mit einer Kreiselegge 3 mit einer Getriebewanne 4, mit einer Reihe nebeneinander angeordneten Werkzeugkreiseln 5, mit einem an der Getriebewanne 4 befestigten Anbaubock 7, mit einer Nachlaufwalze 8, die über Träger schwenkbar mit der Getriebewanne 4 verbunden ist und mit einer am Anbaubock 7 über Anbauteile 10, 11 angebauten oder aufgebauten Drillmaschine 12, mit einem Saatgutbehälter 13, mit einer Scharschiene 14 und mit einer Antriebsvorrichtung 21 für den Antrieb der Säwelle oder der Säräder.

In diesem Fall handelt es sich um eine mechanische Drillmaschine, bei der das Saatgut durch die Schwerkraft zu den Säscharen 35, 36 geleitet wird. Daher muss bei dieser Version der Saatgutbehälter 13 sehr weit hinten angeordnet werden. Die Anbauteile 10, 11 sind daher länger ausgebildet und können gleichzeitig als Schwenkvorrichtung 37 dienen, mit der die Drillmaschine 12 oder der Saatgutbehälter 13 in eine schwerpunktsgünstige Stellung nach vorne geschwenkt werden kann. Der Energiespeicher 19 ist in diesem Fall ein Hydraulikzylinder 38 mit Hydrospeicher 39. Im Hydraulikzylinder ist auf der Ringseite 40 eine Feder 41 vorgesehen, die als Anschlag 23 für den Kolben dient.

Beim Ablassen der Schwenkvorrichtung 37, die aus den Anbauteilen 10, 11 besteht, wird so die Arbeitsstellung vorgegeben. Die Drillmaschine 12 oder der Saatgutbehälter 13 wird so im Abstand zur Kreiselegge 3 während der Arbeit gehalten. Dadurch kann auch hier die Kreiselegge 3 bei Auftreffen auf ein Hindernis nach oben ausweichen, ohne die Drillmaschine 12 oder den Saatgutbehälter 13 anheben zu müssen. Bei einer Stoßbelastung werden gleichzeitig die Feder 41 und der Hydrospeicher 39 aktiv und geben nach. Dabei ist die Kraft der Feder 41 und des Hydrospeichers 39 so bemessen, dass der Saatgutbehälter 13 oder die Drillmaschine 12 sicher in der vorgegebenen Arbeitsstellung gehalten werden. Zum Ausheben des Saatgutbehälters 13 oder der Drillmaschine 12 würde der Ringraum 40 mit Druck beaufschlagt, wodurch die Schwenkvorrichtung umschwenkt und zwar soweit bis die Anbauteile 11 am Anschlag 50 anliegen.

Bei dem Gegenstand der Figur 2 wird auch erreicht, dass durch das Nachgeben der Anbauteile 10 oder 11 eine Überbelastung der Kreiselegge 3 oder der Arbeitswerkzeuge 5 sicher vermieden wird. Auch bei dieser Ausführungsform wird die Kreiselegge 3 über die Nachlaufwalze 8 in der Tiefe geführt und zwar derart, dass die Nachlaufwalze 8 bei Ausweichen der Kreiselegge 3 nicht angehoben werden muss.

Über den Hydraulikzylinder 45, dem Hebel 46 und der Stange 47 können erstens die Säschare 35, 36 und die Antriebsvorrichtung 21 unabhängig von der Drillmaschine 12 und auf Wunsch zusammen mit der Schwenkvorrichtung ausgehoben werden, um ausreichend Freiraum zwischen den Scharen 35, 36, der Antriebsvorrichtung 21 und der Walze 8 zu erzielen. Dadurch wird auch ausreichend Freiraum geschaffen zur Wartung und zum Nachstellen der Abstreifer 51 der Nachlaufwalze 8.

## Patentansprüche

1. Bestellkombination (1) bestehend aus einer Kreiselegge (3) mit mindestens einer Getriebewanne (4), mit einer Reihe nebeneinander angeordneten Werkzeugkreiseln (5), mit einem an der Getriebewanne befestigten Anbaubock (7) für den Anbau an einen Traktor oder ein Zugfahrzeug, mit einer Nachlaufwalze (8) und mit einer Drillmaschine (12) mit Saatgutbehälter (13), die mit der Kreiselegge (3) verbunden und im Abstand dazu angeordnet ist, wobei die Nachlaufwalze (8) über Träger (9) schwenkbar mit der Getriebewanne (4) verbunden ist, die Drillmaschine (12) mit Saatgutbehälter (13) derart an der Kreiselegge (3) ihre Gewichtskraft auf die Kreiselegge (3) übertragend angebaut oder aufgebaut ist daß die Drillmaschine (12) mit Saatgutbehälter (13) oder der Saatgutbehälter (13) und die Kreiselegge (3) gegeneinander elastisch gelagert und dabei ein Ausweichen der Kreiselegge (3) und/oder der Getriebewanne (4) oder der Nachlaufwalze (8) im Wesentlichen nach oben ermöglichend ausgebildet sind.

2. Bestellkombination nach Anspruch 1,
**dadurch gekennzeichnet,**
**dass** zwischen Drillmaschine (12) und/oder Saatgutbehälter (13) und Anbaubock (7) und/oder Getriebewanne (4) Anbauteile (10, 11) angeordnet sind, die elastisch nachgebbar ausgebildet sind.

3. Bestellkombination nach einem der vorhergehenden Ansprüche,
**dadurch gekennzeichnet,**
**dass** die Anbauteile (10, 11) gelenkig am Anbaubock (7) angeordnet sind und um Achsen (17) über mindestens einen Energiespeicher (18, 19), der jeweils im Abstand zu den Achsen (17) an das jeweilige Anbauteil angreift, gegen Anschläge (23) gehalten sind, die vorzugsweise einstellbar ausgebildet sind.

4. Bestellkombination nach einem der vorhergehenden Ansprüche,
**dadurch gekennzeichnet,**
**dass** die Energiespeicher (18, 19) vorgespannt sind und insgesamt eine größere Vorspannkraft besitzen als die Gewichtskraft der Drillmaschine (12).

5. Bestellkombination nach einem der vorhergehenden Ansprüche,
**dadurch gekennzeichnet,**
**dass** der jeweilige Energiespeicher (18, 19) als Gasdruckfeder, Federspeicher, Druckspeicher, Federdämpfungseinheit, Hydraulikzylinder (38) mit Hydrospeicher (39) oder als Federeinheit ausgebildet ist.

6. Bestellkombination nach einem der vorhergehenden Ansprüche,
**dadurch gekennzeichnet,**
**dass** zur Schwingungsdämpfung Stoßdämpfer vorgesehen sind, die vorzugsweise mit mindestens einem Anbauteil (10, 11) und dem Anbaubock (7) verbunden sind.

7. Bestellkombination nach einem der vorhergehenden Ansprüche,
**dadurch gekennzeichnet,**
**dass** die Anbauteile (10, 11) als der Kreiselegge (3) oder der Drillmaschine (12) und/oder dem Saatgutbehälter (13) zugeordnete Schwenkvorrichtung (37) ausgebildet sind.

8. Bestellkombination nach einem der vorhergehenden Ansprüche,
**dadurch gekennzeichnet,**
**dass** sowohl die Kreiselegge (3) als auch eine nachgeordnete Scharschiene (14) breiter als 3,0 m z.B. 4,0 m, 4,5 m, 5,0 m oder 6,0 m sind und für den Transport auf eine geringere zulässige Transportbreite einklappbar ausgebildet sind.

## Claims

1. Agricultural seeder combination (1) consisting of a circular spike harrow (3) comprising at least a gearbox (4), a series of rotating tools (5) arranged next to one another, an attachment piece (7) fastened to the gearbox for attachment to a tractor or a towing vehicle, a trailing roller (8) and a seed drill (12) with a seed container (13) which is connected to the circular spike harrow (3) and spaced from it, wherein the trailing roller (8) is pivotally connected to the gearbox (4) via carriers (9), the seed drill (12) with seed container (13) is mounted to or on the circular spike harrow (3) so as to transmit its weight to the circular spike harrow (3) in such a way that the seed drill (12) with seed container (13) or the seed container (13) and the circular spike harrow (3) are elastically mounted with respect to one another and are thus configured to substantially allow an upward deflection of the circular spike harrow (3) and/or the gearbox (4) or the trailing roller (8).

2. Agricultural seeder combination according to claim 1, **characterised in that** attachment parts (10, 11), which are configured to be elastically yielding, are arranged between the seed drill (12) and/or seed container (13) and attachment piece (7) and/or gearbox (4).

3. Agricultural seeder combination according to any one of the preceding claims, **characterised in that** the attachment parts (10, 11) are arranged in an articulated manner on the attachment piece (7) and are held against stops (23), which are preferably configured to be adjustable, around shafts (17) via at least one energy accumulator (18, 19) which, in each case, engages on the respective attachment part at a spacing from the shafts (17).

4. Agricultural seeder combination according to any one of the preceding claims, **characterised in that** the energy accumulators (18, 19) are biased and in total have a larger biasing force than the weight of the seed drill (12).

5. Agricultural seeder combination according to any one of the preceding claims, **characterised in that** the respective energy accumulator (18, 19) is configured as a gas pressure spring, spring energy accumulator, pressure accumulator, spring damping unit, hydraulic cylinder (38) with hydraulic accumulator (39) or as a spring unit.

6. Agricultural seeder combination according to any one of the preceding claims, **characterised in that** shock absorbers, which are preferably connected to at least one attachment part (10, 11) and the attachment piece (7), are provided for vibration damping.

7. Agricultural seeder combination according to any one of the preceding claims, **characterised in that** the attachment parts (10, 11) are configured as a pivotal device (37) associated with the circular spike harrow (3) or the seed drill (12) and/or the seed container (13).

8. Agricultural seeder combination according to any one of the preceding claims, **characterised in that** both the circular spike harrow (3) and a downstream share rail (14) are wider than 3.0 m, for example 4.0 m, 4.5 m, 5.0 m or 6.0 m and are configured so as to be retractable to a smaller permissible conveying width for conveying.

## Revendications

1. Ensemble combiné de culture (1) constitué par une herse rotative (3) comportant au moins un logement de transmission (4), un ensemble comportant une rangée de toupies (5) disposées côte-à-côte, un support de montage rapporté (7) fixée au logement de transmission, pour le montage rapporté sur un tracteur ou un véhicule tracteur, un rouleau aval (8) et un semoir (12) comportant un récipient (13) pour les graines, qui est relié à la herse rotative (3) et est disposé à distance de cette dernière, et dans lequel le rouleau aval (8) est relié, de manière à pouvoir pivoter, au logement de transmission (4), le semoir (12) est rapporté ou monté sur la herse rotative (3) de manière à transmettre son poids à la herse rotative (3), de telle sorte que le semoir (12) équipé du récipient à graines (13) ou le récipient à graines (13) et la herse rotative (3) sont montés élastiquement l'un par rapport à l'autre et sont agencés de manière à permettre un écartement de la herse rotative (3) et/ou du logement de transmission (4) et/ou du rouleau aval (8) essentiellement vers le haut.

2. Ensemble combiné de culture selon la revendication 1, **caractérisé en ce qu'**entre le semoir (12) et/ou le récipient à graines (13) et le support de montage rapporté (7) et/ou le logement de transmission (4) sont disposées des parties de montage (10,11), qui sont agencées de manière à pouvoir s'écarter élastiquement.

3. Ensemble combiné de culture selon l'une des revendications précédentes, **caractérisé en ce que** les parties de montage (10,11) sont disposées d'une manière articulée sur le support de montage rapporté (7) et sont retenues autour d'axes (17) à l'aide d'au moins un accumulateur d'énergie (18,19), qui s'applique respectivement à distance des axes (17) contre la partie respective de montage rapporté, contre des butées (23) qui sont agencées de manière à être de préférence réglables.

4. Ensemble combiné de culture selon l'une des revendications précédentes, **caractérisé en ce que** les accumulateurs d'énergie (18,19) sont précontraints et possèdent globalement une force de précontrainte supérieure à la force du poids du semoir (12).

5. Ensemble combiné de culture selon l'une des revendications précédentes, **caractérisé en ce que** l'accumulateur d'énergie respectif (18,19) est agencé sous la forme d'un ressort de pression à gaz, d'un accumulateur à ressort, d'un accumulateur de pression, d'une unité d'amortissement à ressort, d'un vérin hydraulique (38) comportant un accumulateur hydraulique (39) ou sous la forme d'une unité à ressort.

6. Ensemble combiné de culture selon l'une des revendications précédentes, **caractérisé en ce que** pour l'amortissement des vibrations il est prévu des amortisseurs de chocs, qui sont reliés de préférence à au moins une partie de montage (10,11) et au support de montage rapporté (7).

7. Ensemble combiné de culture selon l'une des revendications précédentes, **caractérisé en ce que** les parties de montage (10,11) sont agencées sous la forme d'un dispositif pivotant (37) associé à la herse rotative (3) ou au semoir (12) et/ou au récipient à graines (13).

8. Ensemble combiné de culture selon l'une des revendications précédentes, **caractérisé en ce qu'**aussi bien la herse rotative (3) qu'une barre à soc (14) installée en aval d'une largeur supérieure à 3,0 m et égale par exemple à 4,0 m, 4,5 m, 5,0 m ou 6,0 m et sont agencées de manière à être rabattables, pour le transport, sur une largeur de transport plus faible admissible.
